# EUROPEAN PATENT SPECIFICATION

(11) **EP 1 961 854 B1**
(45) Date of publication and mention of the grant of the patent: **15.03.2017**
(21) Application number: 07122495.0
(22) Date of filing: 06.12.2007
(51) Int. Cl.: D06F 35/00, D06F 33/02

(54) **Washing machine and washing control method of the same**
Waschmaschine und Waschsteuerverfahren dafür
Machine à laver et son procédé de commande de lavage

(30) Priority: 26.02.2007 KR 20070019123
(43) Date of publication of application: 27.08.2008
(73) Proprietor: Samsung Electronics Co., Ltd., Suwon-si, Gyeonggi-do, 443-742 (KR)
(72) Inventor: Bang, Eun Suk, Seoul (KR); Pyo, Sang Yeon, Gyeonggi-do (KR); Kim, Hyun Sook, Gyeonggi-do (KR); Park, Jae Ryong, Gyeonggi-do (KR); Kim, Sung Hoon c/o DA Research Inst, Samsung Electronics Co., Gyeonggi-do (KR); Park, Jee Hun, Gyeonggi-do (KR)
(74) Representative: Grünecker Patent- und Rechtsanwälte PartG mbB

(56) References cited:
- EP-A- 1 505 193
- WO-A-2006/071022
- DE-A1- 19 854 435
- DE-A1- 19 908 804

## Description

### BACKGROUND

### 1. Field

The present invention relates to a washing machine and a washing control method of the same to perform heated washing using a small amount of water.

### 2. Description of the Related Art

Generally, a washing machine (normally, a drum type washing machine) is a machine, including a water tub to receive water (wash water or rinse water) and a cylindrical rotary drum rotatably mounted in the water tub to receive laundry, that washes the laundry by lifting and dropping the laundry in the rotary drum along the inner surface of the rotary drum during the rotation of the rotary drum.

This washing machine detects the weight of laundry (the amount of a load) to decide the amount of wash water according to a user's selection of a washing course, supplies water having an amount sufficient to wet the laundry and detergent into the water tub according to the decided amount of wash water, heats the water and the detergent supplied into the water tub using a heater disposed between the water tub and the rotary drum, when heated washing is to be performed, and performs a washing operation while detergent water (water + detergent), the temperature of which is increased by the heater, is forwarded to the laundry, and the laundry is dropped by the rotation of the rotary drum.

However, it is necessary to fill a space defined between the water tub and the rotary drum with water to perform the washing. As a result, a large amount of water is used, and therefore, a large amount of energy is required to increase the temperature of the water. Also, as water consumption increases, a large amount of detergent is used to perform high-concentration washing.

Furthermore, when the amount of water supplied is small, the amount of water gathered in the water tub is also small, because the water is absorbed in the laundry during the wetting of the laundry. As a result, the heater is exposed, and therefore, it is not possible to perform heated washing. Although the water is gathered in the water tub, only the gathered water is heated, and therefore, the heated water does not reach the center of the laundry. Consequently, the temperature of the laundry is not uniformly distributed, whereby the washing efficiency is variable.

DE 199 08 804 A1 discloses a method for the operation of a washing machine in an automatically controlled washing machine. Therefore, in a laundry wetting phase, the drum is rotated with 80-150 rpm, such that the laundry pieces are attached to the circumferential wall of the drum without falling down. While the pump of the recirculation system is switched on, fresh water is provided through the fresh water supply until the sensor detects a continuous flow. Subsequently, the drum is reversibly rotated with 0-55 rpm and the laundry absorbs such an amount of water that the continuous flow in the recirculation system collapses. The water level of the recirculation system stays directly beneath an outflow passage of the same and a heating chamber thereof is completely filled with water. However, in this type of washing machine, the laundry comprises a significant amount of water during the heating and therefore this washing machine has the same drawbacks as the type of washing machine discussed beforehand.

WO 2006/071022 A discloses a control method for a drum washing machine, wherein the amount of laundry loaded into the drum is sensed.

### SUMMARY

Therefore, it is an aspect of the invention to provide a washing machine and a washing control method of the same to rotate a rotary drum, at the minimum RPM at which laundry is spin-dried, to squeeze out water from the laundry, heating the squeezed water, and resupplying the heated water to the laundry, thereby performing heated washing using a minimized amount of water.

In another aspect of the invention, a washing machine and a washing control method of the same supply water during the squeezing out of water from laundry by the rotation of a rotary drum at the minimum RPM at which the laundry is spin-dried, and heat the squeezed water when the squeezed water is below a heater safety water level, thereby securing the safety of heated washing.

In a further aspect of the invention, a washing machine and a washing control method of the same increase the temperature of water to a target temperature during the squeezing out of water from laundry, by the rotation of a rotary drum at the minimum RPM at which the laundry is spin-dried, and heat the squeezed water, and uniformly distribute the heated water throughout the laundry, thereby accomplishing uniform washing efficiency.

In accordance with one aspect of the present invention, a washing control method of a washing machine that includes a water tub, a rotary drum mounted in the water tub to receive laundry, and a circulation unit to supply water from the water tub into the rotary drum, the washing control method includes detecting the amount of the load according to the weight of the laundry, supplying an amount of water set according to the detected amount of the load into the water tub, supplying the water in the water tub into the rotary drum through the circulation unit to wet the laundry, separating the water absorbed in the laundry from the laundry by rotating the rotary drum, and heating the separated water and resupplying the heated water into the rotary drum through the circulation unit.

Generally, the set amount of water is the minimum water supply amount set based on the detected amount of the load.

Typically, the water supplied into the water tub is detergent water including detergent and wash water mixed with each other.

Generally, the operation of separating the water absorbed in the laundry from the laundry includes squeezing out the detergent water absorbed in the laundry from the laundry by rotating the rotary drum at the minimum RPM at which the laundry may be spin-dried.

Typically, the minimum RPM is approximately 50 to 300 RPM.

Generally, the washing control method further includes detecting the water level of the water before heating the water. The detected water level is compared with a predetermined water level, and, when the detected water level is below the predetermined water level, water is supplied into the water tub.

Typically, the predetermined water level is a heater safety water level at which the water may be heated.

Generally, the washing control method further includes detecting the temperature of the water. The detected temperature is compared with a predetermined target temperature, and, when the detected temperature is below the target temperature, the water is heated until the temperature of the water reaches the target temperature.

Typically, the operation of heating the separated water includes activating a washing heater to heat the water until the temperature of the water reaches the target temperature, and, when the detected temperature has reached the target temperature, deactivating the washing heater to maintain the water resupplied into the rotary drum at the optimum temperature.

In another aspect, a washing machine includes a water tub to receive water, a rotary drum mounted in the water tub to receive laundry, a circulation unit to supply the water in the water tub into the rotary drum, a water supply unit to control the supply of water, a washing heater to heat water, and a control unit to control the water supply unit to supply water into the water tub, control the circulation unit to supply the water in the water tub into the rotary drum such that the laundry is wetted by the water, control the washing heater to heat the water in the water tub after the water absorbed in the laundry is separated from the laundry by the rotation of the rotary drum, and control the heated water to be resupplied into the rotary drum such that washing is performed using the heated water.

Generally, the control unit detects the amount of the load according to the weight of the laundry and controls the water supply unit to supply an amount of water set according to the detected amount of the load into the water tub.

Typically, the control unit rotates the rotary drum at the minimum RPM at which the laundry may be spin-dried to squeeze out the detergent water absorbed in the laundry from the laundry.

Generally, the washing machine further includes a water level detection unit to detect the water level of the water. The control unit compares the water level detected by the water level detection unit with a predetermined water level before heating the water, and, when the detected water level is below the predetermined water level, controls the water supply unit to supply water into the water tub.

Typically, the washing machine further includes a temperature detection unit to detect the temperature of the water. The control unit compares the temperature detected by the temperature detection unit with a predetermined target temperature, activating the washing heater until the temperature of the water reaches the target temperature when the detected temperature is below the target temperature, and deactivating the washing heater to maintain the water resupplied into the rotary drum at the optimum temperature when the detected temperature has reached the target temperature.

Additional aspects and/or advantages of the invention will be set forth in part in the description which follows and, in part, will be obvious from the description, or may be learned by practice of the invention.

### BRIEF DESCRIPTION OF THE DRAWINGS

These and/or other aspects and advantages of the invention will become apparent and more readily appreciated from the following description of the embodiments, taken in conjunction with the accompanying drawings, of which:
FIG. 1 is a sectional view illustrating the supply of water to laundry in a washing machine according to an embodiment of the present invention;
FIG. 2 is a sectional view illustrating the squeezing out of water from the laundry supply of water to laundry in the washing machine according to an embodiment of the present invention;
FIG. 3 is a perspective view of a rotary drum applied to an embodiment of the present invention;
FIG. 4 is a sectional view of the rotary drum;
FIG. 5 is a control block diagram of the washing machine according to an embodiment of the present invention; and
FIGS. 6A and 6B are flow charts illustrating a washing control method of the washing machine according to an embodiment of the present invention.

### DETAILED DESCRIPTION OF THE EMBODIMENTS

Reference will now be made in detail to the embodiment of the present invention, examples of which are illustrated in the accompanying drawings, wherein like reference numerals refer to like elements throughout. The embodiment is described below to explain the present invention by referring to the figures.

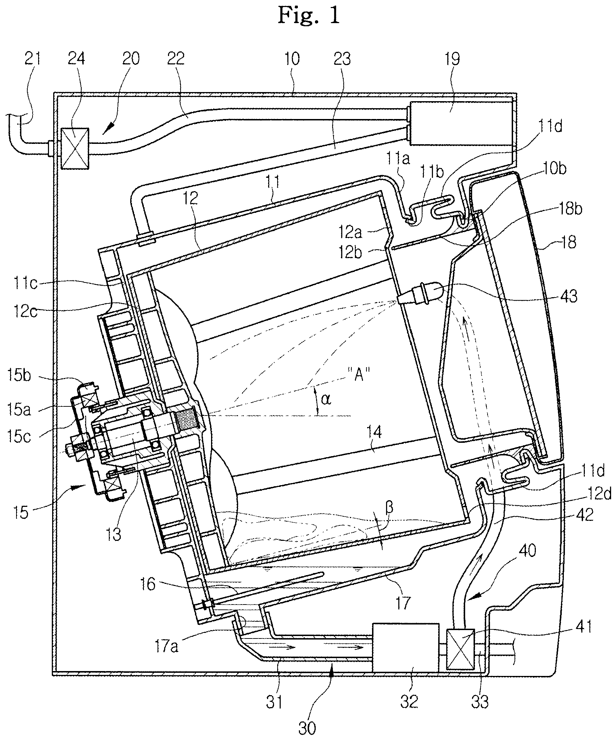

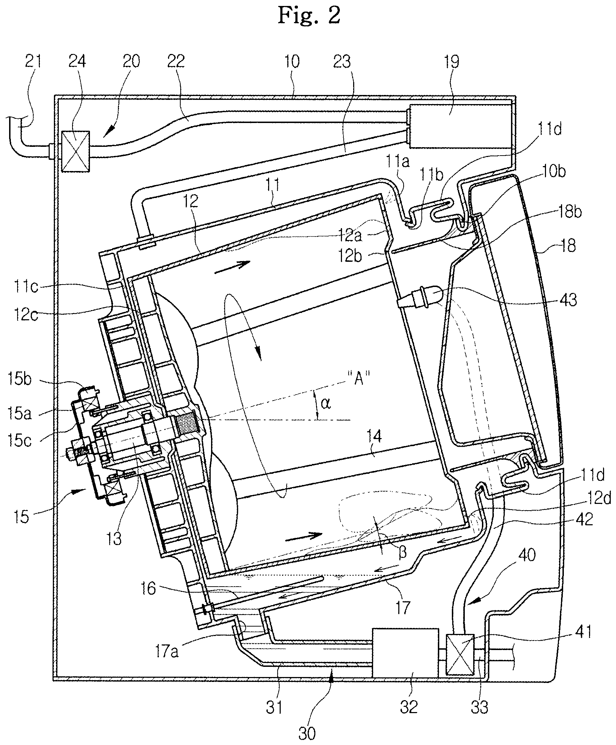

FIG. 1 is a sectional view illustrating the supply of water to laundry in a washing machine according to an embodiment of the present invention, and FIG. 2 is a sectional view illustrating the squeezing out of water from the laundry in accordance with an embodiment of the present invention.

Referring to FIGS. 1 and 2, the washing machine includes a drum-type water tub 11 mounted in a machine body 10 to receive water (wash water or rinse water) and a cylindrical rotary drum 12 rotatably mounted in the water tub 11.

The water tub 11 is mounted at a predetermined angle α to the installation surface of the washing machine such that a front part 11a, having an inlet 11b formed therein, is located at a higher position than a rear part 11c. The rotary drum 12 is mounted in the water tub 11 in the same inclination angle as the water tub 11 such that a front part 12a, having an inlet 12b formed therein, is located at a higher position than a rear part 12c.

Outside the rear part 11c of the water tub 11 is mounted a drive unit, such as a motor 15, to rotate a rotary shaft 13 connected to the rotary drum 12 such that washing, rinsing, and spin-drying operations are performed. The motor 15 includes a stator 15a fixed to the rear part 11c of the water tub 11, a rotor 15b rotatably disposed around the stator 15a, and a rotary plate 15c connected between the rotor 15b and the rotary shaft 13.

At the inside bottom of the water tub 11 is mounted a washing heater 16 to heat water (specifically, detergent water) supplied into the water tub 11. For the installation of the washing heater 16, a heater receiving part 17 is formed in the bottom of the water tub 11. The heater receiving part 17 protrudes downward such that a predetermined amount of water is gathered in the heater receiving part 17 while the washing heater 16 is received in the heater receiving part 17. Consequently, the washing heater 16 is immersed in the water gathered in the heater receiving part 17. Since the washing heater 16 is received in the heater receiving part 17, the rotary drum 12 may be rotated without interference between the rotary drum 12 and the washing heater 16.

In the front of the machine body 10 is formed an inlet 18b corresponding to the inlet 12b of the rotary drum 12 and the inlet 11b of the water tub 11 such that laundry may be put into or taken out from the rotary drum 12. At the machine body 10, adjacent to the inlet 18b, is mounted a door 18 to open and close the inlet 18b. Between the inlet 10b of the machine body 10 and the inlet 11 b of the water tub 11 is mounted a cylindrical diaphragm 11 d to prevent the leakage of wash water.

Above the water tub 11 are mounted a detergent supply unit 19 to supply detergent and a water supply unit 20 to supply water (wash water or rinse water).

The detergent supply unit 19 has several partitioned spaces. The detergent supply unit 19 is mounted at the front side of the machine body 10 such that a user easily puts detergent and rinse in the respective partitioned spaces. The detergent supply unit 19 includes a preliminary washing detergent box to store detergent used for preliminary washing, a main washing detergent box to store detergent used for main washing, and a rinse box to store rinse used for rinsing. The details of the detergent supply unit 19 are disclosed in Korean Patent Application No. 2003-0011317, which has been filed in the name of the applicant of the present application. Of course, other well-known technologies may be applied to the detergent supply unit 19.

The water supply unit 20 includes a first water supply pipe 22 connected between an external water supply pipe 21, through which water (wash water or rinse water) is supplied into the water tub 11, and the detergent supply unit 19, a second water supply pipe 23 connected between the detergent supply unit 19 and the water tub 11, and a water supply valve 24 mounted on the first water supply pipe 22 to control the supply of water. Consequently, water is supplied into the water tub 11 via the detergent supply unit 19 such that detergent is supplied into the water tub 11 together with the water.

The washing machine further includes a drainage unit 30 to drain the water in the water tub 11 and a circulation unit 40 to supply the water, heated by the washing heater 16, in the water tub 11 into the rotary drum 12. The drainage unit 30 includes a first drainage pipe 31 connected to a drainage port 17a formed at the heater receiving part 17 in the bottom of the water tub 11 to guide the water in the water tub 11 to the outside, a drainage pump 32 mounted on the first drainage pipe 31, and a second drainage pipe 33 connected to the outlet of the drainage pump 32. The circulation unit 40 includes a flow channel switching valve 41 mounted on the second drainage pipe 33, a circulation pipe 42 extending from the flow channel switching valve 41 to the inlet 12b of the rotary drum 12, and an injection nozzle 43 mounted at the outlet of the circulation pipe 42. The flow channel switching valve 41 serves to switch flow channels such that water from the outlet of the drainage pump 32 is drained to the outside or flows to the circulation pipe 42. The flow channel switching valve 41 may be an electric three-way valve. The injection nozzle 43 is mounted adjacent to the inlet 12b of the rotary drum 12 such that the injection nozzle 43 injects water into the rotary drum 12 through the inlet 12b of the rotary drum 12.

Consequently, when the drainage pump 32 is operated while the flow channel switching valve 41 is operated such that water flows to the circulation pipe 42, water in the bottom of the water tub 11 is injected into the rotary drum 12 through the first drainage pipe 31 and the circulation pipe 42. Also, when the drainage pump 32 is operated while the flow channel switching valve 41 is operated such that water flows to the second drainage pipe 33, the water in the water tub 11 is drained to the outside.

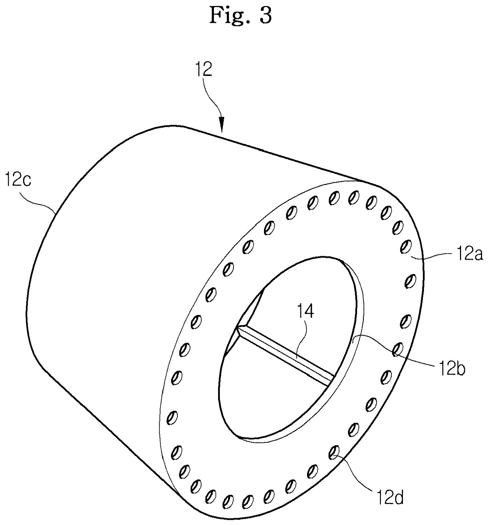

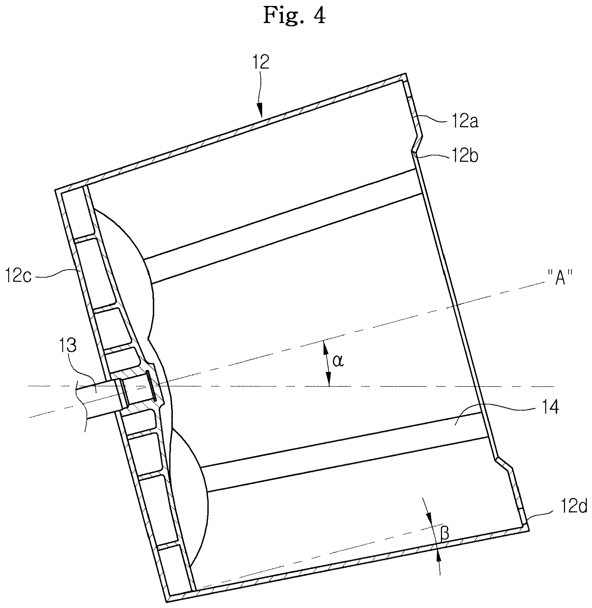

FIG. 3 is a perspective view of a rotary drum applied to an embodiment of the present invention, and FIG. 4 is a sectional view of the rotary drum.

Referring to FIGS. 3 and 4, the rotary drum 12 is mounted such that a rotation axis A of the rotary drum 12 is at a predetermined angle α to the installation surface of the washing machine while the front part 12a, having the inlet 12b formed therein, is directed forward. In this case, the rotary shaft 13, coupled to the center of the rear part 12c of the rotary drum 12, is rotatably supported at the rear central part of the water tub 11 such that the rotary drum 12 may be rotated in the water tub 11.

The reason why the rotation axis A of the rotary drum 12 is at the predetermined angle α to the installation surface of the washing machine is that, when water is supplied into the rotary drum 12, a predetermined amount of water necessary for washing and rinsing is gathered in the rotary drum 12 such that laundry is wetted by the water.

In the front part 12a of the rotary drum 12 are formed a plurality of spin-drying holes 12d. Inside the rotary drum 12 are mounted a plurality of lifters 14 to raise and drop laundry in the rotary drum 12 during the rotation of the rotary drum 12. The reason why the circumference of the rotary drum 12 is at a predetermined angle β to the rotation axis A of the rotary drum 12 and the holes 12d are formed along the edge of the front part 12a is to guide water, moving in the radial direction of the rotary drum 12 due to a centrifugal force caused when the rotary drum 12 is rotated at the minimum RPM at which laundry may be spin-dried, to the holes 12d of the front part 12a along the incline such that the water is drained out of the rotary drum 12. For effective drainage, the tilt angle β at the circumference of the rotary drum 12 is generally 0.5 degrees or more.

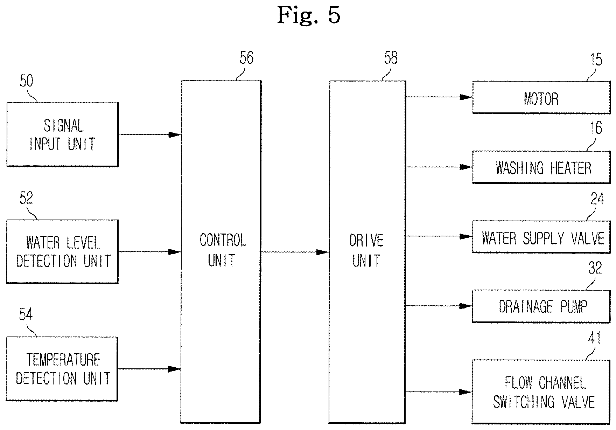

FIG. 5 is a control block diagram of the washing machine according to an embodiment of the present invention. In addition to the components shown in FIGS. 1 and 2, the washing machine further includes a signal input unit 50, a water level detection unit 52, a temperature detection unit 54, a control unit 56, and a drive unit 58.

The signal input unit 50 inputs operation information, such as a washing course, a washing temperature, spin-drying RPM, and the addition of rinsing, which are selected by a user, to the control unit 56. The water level detection unit 52 detects the water level of water supplied into the water tub 11, and the temperature detection unit 54 detects the temperature of water supplied into the water tub 11.

The control unit 56 is a microcomputer to control the washing machine based on the operation information inputted from the signal input unit 50. The control unit 56 stores the amount of wash water, motor RPM and operation rate (motor on-off time), and washing time set according to the amount of the load (the weight of laundry) in the selected washing course.

For heated washing, therefore, the control unit 56 supplies the water (specifically, detergent water) in the water tub 11 into the rotary drum 12 through the circulation unit 40 to wet laundry after the supply of a predetermined amount of wash water, rotates the rotary drum 12, at the minimum RPM at which the laundry may be spin-dried, to squeeze out water from the laundry, and detects the water level of the squeezed water. The control unit 56 controls the driving of the motor 15, the washing heater 16, the water supply unit 20, and the circulation unit 40 such that, when the detected water level is below a predetermined heater safety water level, water is supplied through the water supply unit 20 until the water level reaches the heater safety water level, and, when the detected water level reaches the predetermined heater safety water level, water is heated by activating the washing heater 16 until the temperature of the water reaches a target temperature, and the heated water is resupplied into the rotary drum 12.

The drive unit 58 drives the motor 15, the washing heater 16, the water supply valve 24, the drainage pump 32, and the flow channel switching valve 41 according to a drive control signal of the control unit 56.

Hereinafter, the operation of the washing machine with the above-stated construction and a washing control method of the washing machine will be described.

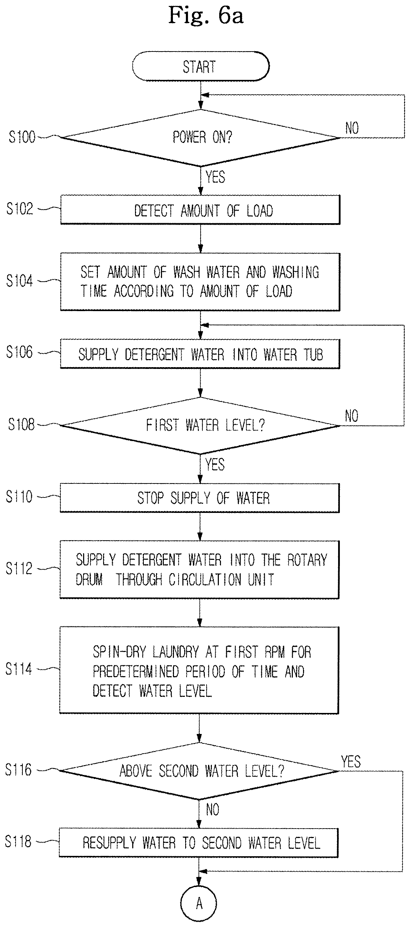

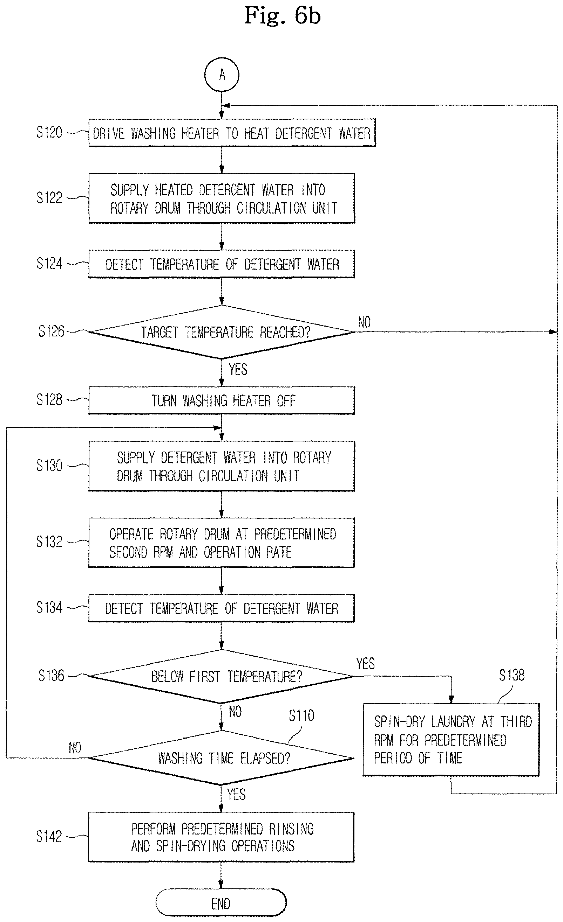

FIGS. 6A and 6B are flow charts illustrating a washing control method of the washing machine according to an embodiment of the present invention.

First, when a user puts laundry in the rotary drum 12 and selects operation information, such as a washing course, washing temperature, spin-drying RPM, and the addition of rinsing, based on the kinds of the laundry, the operation information selected by the user is inputted to the control unit 56 through the signal input unit 54.

Subsequently, the control unit 56 determines whether the power is on so that a washing operation is performed based on the operation information inputted from the signal input unit 54 (S100).

When the power is on, the control unit 56 detects the amount of the load (the weight of laundry) put in the rotary drum 12 (S102), and sets the minimum amount of wash water, motor operation rate (motor on-off time), and washing time for each washing course based on the detected amount of the load (S104).

Subsequently, the control unit 56 controls the water supply unit 20 to supply the minimum amount of wash water set for each washing course based on the amount of the load. As a result, the water supply valve 24 is opened, and water (wash water) flows through the water supply pipes 21 and 22, the detergent supply unit 19, and the second water supply pipe 23, whereby detergent water (water + detergent) is supplied into the water tub 11 (S106).

During the supply of detergent water for washing, the water level detection unit 52 detects the water level of the detergent water supplied into the water tub 11 to determine whether the detected water level is at a predetermined first water level (a water level decided according to the set amount of wash water) (S108).

When the detected water level has not reached the predetermined first water level, the control unit 56 controls water to be continuously supplied into the water tub 11 until the water level reaches the first water level. When the detected water level reaches the predetermined first water level, the control unit 56 closes the water supply valve 24 such that the water supply is interrupted (S110).

After the interruption of the water supply, the control unit 56 controls the circulation unit 40 such that laundry is wetted by the detergent water supplied into the water tub 11. As a result, the flow channel switching valve 41 of the circulation unit 50 is operated such that the outlet of the drainage pump 32 communicates with the circulation pipe 42. As the drainage pump 32 is operated, the detergent water in the bottom of the water tub 11 is supplied into the rotary drum 12 through the drainage pipe 31 and the circulation pipe 42 (S112). At this time, the detergent water, supplied into the rotary drum 12, is injected to the laundry through the injection nozzle 43 such that the laundry is uniformly wetted by the detergent water.

After a wetting operation to supply the detergent water in the water tub 11 into the rotary drum 12 through the circulation unit 40 is performed for a predetermined period of time (time decided according to the amount of the load; approximately 4 minutes), the control unit 56 rotates the rotary drum 12 at a predetermined first RPM (the minimum RPM at which laundry may be spin-dried; approximately 50 to 300 RPM) for a predetermined period of time (approximately 1 minute) to secure a heater safety water level at which the detergent water may be heated.

As the rotary drum 12 is rotated at the first RPM, detergent water absorbed in the laundry is separated from the laundry and is introduced into the water tub 11 through the holes 12d formed in the front part 12a of the rotary drum 12. The water level of the detergent water gathered in the water tub 11 is detected (S114).

The control unit 56 determines whether the water level of the detergent water gathered in the water tub 11 has reached a predetermined second water level (a heater safety water level necessary for heated washing; a water level at which the washing heater is immersed in the detergent water) (S116). When the water level of the detergent water does not reach a level of the second water level, the control unit 56 controls the water supply unit 20 to resupply water into the water tub 11 until the water level of the detergent water reaches the second water level (S118).

When it is determined at S116 that the water level of the detergent water gathered in the water tub 11 has reached the second water level, which means that the heater safety water level for heating is secured, the control unit 56 controls the washing heater to heat the detergent water gathered in the water tub 11 (S120).

At this time, the control unit 56 controls the circulation unit 40 to be operated such that the laundry is heated by the heated detergent water. As a result, the heated detergent water in the water tub 11 is supplied into the rotary drum 12 through the drainage pipe 31 and the circulation pipe 42 (S122). The detergent water, supplied into the rotary drum 12, is injected to the laundry through the injection nozzle 43 with the result that the laundry is uniformly heated.

Also, the control unit 56 detects the temperature of the heated detergent water by utilizing the temperature detection unit 54 (S124), and determines whether the temperature of the detergent water has reached a predetermined target temperature (a default value based on washing temperature set by a user or a basic default value) (S126).

When it is determined at S126 that the temperature of the detergent water has not yet reached the target temperature, the procedure returns to S120 to activate the washing heater 16 until the temperature of the detergent water has reached the target temperature.

When it is determined at S126, on the other hand, that the temperature of the detergent water has reached the target temperature, the control unit 56 turns the washing heater 16 off (i.e., deactivates the washing heater) (S128), and continuously supplies the detergent water, heated to the target temperature, into the rotary drum 12 through the circulation unit 40 to uniformly heat the entire laundry (S130).

At this time, the control unit 56 controls the motor 15 to be driven, such that the rotary drum 12 is operated at a predetermined second RPM (washing RPM) and operation rate, to perform heated washing that accomplishes uniform washing efficiency using the minimum amount of water (S132).

As the heated washing is performed, the temperature of the detergent water gradually decreases. At this time, the temperature detection unit 54 detects the temperature of the detergent water and inputs the detected temperature of the detergent water to the control unit 56.

The control unit 56 determines whether the detected temperature of the detergent water is below a predetermined first temperature (a temperature of the detergent water at which the washing heater is redriven) (S136). When the detected temperature of the detergent water is below the first temperature, the control unit 56 controls the rotary drum 12 to be rotated at a predetermined third RPM (approximately 150 RPM) for a predetermined period of time (approximately 1 minute) such that the detergent water is separated from the laundry (S138), and the procedure returns to S120 to heat the detergent water to the target temperature.

When it is determined at S136 that the detected temperature of the detergent water is not below the first temperature, which means that the temperature of the detergent water is suitable for heated washing, the control unit 56 determines whether a washing time set according to the amount of the load has elapsed (S140). When the washing time has not elapsed, the procedure returns to S130 to perform a washing operation that washes the laundry using the heated detergent water.

When it is determined at S140 that the washing time has elapsed, the control unit 56 performs a subsequent rinsing and spin-drying operation set according to the amount of the load (S142).

As is apparent from the above description, the washing machine according to embodiments of the present invention and the washing control method of the same have the effect of rotating the rotary drum at the minimum RPM at which laundry may be spin-dried, after the supply of water, to squeeze out water from the laundry, heating the squeezed water, and resupplying the heated water to the laundry, thereby performing heated washing using a minimized amount of water, and therefore, accomplishing water and power saving.

Furthermore, the washing machine according to embodiments of the present invention and the washing control method of the same have the effect of supplying water, during the squeezing out of water from laundry, by the rotation of the rotary drum at the minimum RPM at which the laundry may be spin-dried, and heating the squeezed water, when the squeezed water is below the heater safety water level, thereby securing the safety of heated washing. Also, the washing machine according to embodiments of the present invention and the washing control method of the same have the effect of increasing the temperature of water to the target temperature during the squeezing out of water from laundry by the rotation of the rotary drum at the minimum RPM at which the laundry may be spin-dried, and heating the squeezed water when the temperature of the squeezed water has fallen below the heater safety water level, and uniformly distributing the heated water throughout the laundry, thereby accomplishing uniform washing efficiency. Although a few embodiments of the present invention have been shown and described, it would be appreciated by those skilled in the art that changes may be made in this embodiment without departing from the principles of the invention, the scope of which is defined in the claims and their equivalents.

## Claims

1. A washing control method of a washing machine including a water tub, a rotary drum mounted in the water tub to receive laundry, and a circulation unit to supply water from the water tub into the rotary drum, the washing control method comprising the steps of:
detecting an amount of a load according to a weight of the laundry;
supplying an amount of water set according to the detected amount of the load into the water tub;
supplying the water in the water tub into the rotary drum through the circulation unit to wet the laundry;
**characterized in that** the method further comprises the steps of:
separating the water, absorbed in the laundry, from the laundry by rotating the rotary drum; and
heating the separated water and resupplying the heated water into the rotary drum through the circulation unit.

2. The washing control method according to claim 1, wherein the set amount of water is a minimum water supply amount set based on the detected amount of the load.

3. The washing control method according to claim 1, wherein the water supplied into the water tub is detergent water including detergent and wash water mixed with each other.

4. The washing control method according to claim 3, wherein the separating the water, absorbed in the laundry, from the laundry includes
squeezing out the detergent water absorbed in the laundry from the laundry by rotating the rotary drum at a minimum RPM at which the laundry is spin-dried.

5. The washing control method according to claim 4, wherein the minimum RPM is approximately 50 to 300 RPM.

6. The washing control method according to claim 1, further comprising the step of:
detecting a water level of the water before heating the water, wherein
the detected water level is compared with a predetermined water level, and, when the detected water level is below the predetermined water level, water is supplied into the water tub.

7. The washing control method according to claim 6, wherein the predetermined water level is a heater safety water level at which the water is heated.

8. The washing control method according to claim 1, further comprising the step of:
detecting a temperature of the water, wherein
the detected temperature is compared with a predetermined target temperature, and, when the detected temperature is below the target temperature, the water is heated until the temperature of the water reaches the target temperature.

9. The washing control method according to claim 8, wherein the heating the separated water includes
activating a washing heater until the temperature of the water reaches the target temperature, and, when the detected temperature has reached the target temperature, deactivating the washing heater to maintain the water resupplied into the rotary drum at an optimum temperature.

10. A washing machine comprising:
a water tub (11) to receive water;
a rotary drum (12) mounted in the water tub (11) to receive laundry;
a circulation unit (40) to supply the water in the water tub (11) into the rotary drum (12);
a water supply unit (20) to control the supply of water;
a washing heater (16) to heat water; and
a control unit (56) to detect an amount of load according to a weight of the laundry, control the water supply unit to supply an amount of water set according to the detected amount of the load into the water tub (11),
control the circulation unit (40) to supply the water in the water tub (11) into the rotary drum (12) such that the laundry is wetted by the water, control the washing heater (16) to heat the water, and control the heated water to be resupplied into the rotary drum (12) such that washing is performed using the heated water;
**characterized in that**
the control unit is adapted to control the washing heater (16) to heat the water in the water tub (11) after the water, absorbed in the laundry, is separated from the laundry by the rotation of the rotary drum (12).

11. The washing machine according to claim 10, wherein the control unit (56) detects an amount of a load according to a weight of the laundry and controls the water supply unit (20) to supply an amount of water set according to the detected amount of the load into the water tub (11).

12. The washing machine according to claim 11, wherein the set amount of water is a minimum water supply amount set based on the detected amount of the load.

13. The washing machine according to claim 10, wherein the water supplied into the water tub (11) is detergent water including detergent and wash water mixed with each other.

14. The washing machine according to claim 13, wherein the control unit (56) rotates the rotary drum (12), at a minimum RPM at which the laundry is spin-dried to squeeze out the detergent water absorbed in the laundry from the laundry.

15. The washing machine according to claim 14, wherein the minimum RPM is approximately 50 to 300 RPM.

16. The washing machine according to claim 10, further comprising:
a water level detection unit (52) to detect a water level of the water, wherein
the control unit (56) compares the water level detected by the water level detection unit (52) with a predetermined water level before heating the water, and, when the detected water level is below the predetermined water level, controls the water supply unit (20) to supply water into the water tub (11).

17. The washing machine according to claim 16, wherein the predetermined water level is a heater safety water level at which the water is heated.

18. The washing machine according to claim 10, further comprising:
a temperature detection unit (54) to detect a temperature of the water, wherein
the control unit (56) compares the temperature detected by the temperature detection unit (54) with a predetermined target temperature, and activates the washing heater (16) until the temperature of the water reaches the target temperature when the detected temperature is below the target temperature.

19. The washing machine according to claim 18, wherein the heating the separated water includes
when the detected temperature has reached the target temperature, deactivating the washing heater (16) to maintain the water resupplied into the rotary drum (12) at an optimum temperature.

## Patentansprüche

1. Waschsteuerverfahren einer Waschmaschine, umfassend einen Wasserbottich, eine Drehtrommel, die in dem Wasserbottich angebracht ist, um Wäsche aufzunehmen, und eine Zirkulationseinheit, um Wasser von dem Wasserbottich in die Drehtrommel zuzuführen, wobei das Waschsteuerverfahren folgende Schritte umfasst:
Erfassen eines Umfangs einer Ladung gemäß einem Gewicht der Wäsche;
Zuführen einer Menge von Wasser, die gemäß dem erfassten Umfang der Ladung in den Wasserbottich eingestellt ist; und
Zuführen des Wassers in dem Wasserbottich in die Drehtrommel durch die Zirkulationseinheit, um die Wäsche zu wässern;
**dadurch gekennzeichnet, dass** das Verfahren weiterhin folgende Schritte umfasst:
Trennen des Wassers, das in der Wäsche absorbiert wird, aus der Wäsche durch Drehen der Drehtrommel; und
Erwärmen des getrennten Wassers und erneutes Zuführen des erwärmten Wassers in die Drehtrommel durch die Zirkulationseinheit.

2. Waschsteuerverfahren nach Anspruch 1, bei dem die eingestellte Menge von Wasser eine minimale Wasserzuführmenge ist, die auf der Basis des erfassten Umfangs der Ladung eingestellt wird.

3. Waschsteuerverfahren nach Anspruch 1, bei dem das Wasser, das in den Wasserbottich zugeführt wird, Waschmittelwasser, das Waschmittel enthält, und Waschwasser ist, die miteinander gemischt sind.

4. Waschsteuerverfahren nach Anspruch 3, bei dem das Trennen des Wassers, das in der Wäsche absorbiert ist, aus der Wäsche umfasst,
das Waschmittelwasser, das in der Wäsche absorbiert ist, aus der Wäsche zu drücken, indem die Drehtrommel mit minimaler Umdrehungszahl pro Minute gedreht wird, bei der die Wäsche geschleudert wird.

5. Waschsteuerverfahren nach Anspruch 4, bei dem die minimale Umdrehungszahl pro Minute etwa 50 bis 300 U/min beträgt.

6. Waschsteuerverfahren nach Anspruch 1, weiterhin umfassend folgenden Schritt:
Erfassen eines Wasserpegels des Wassers vor dem Erwärmen des Wassers, wobei
der Erfasste Wasserpegel mit einem vorbestimmten Wasserpegel verglichen wird und, wenn der erfasste Wasserpegel unter dem vorbestimmten Wasserpegel ist, Wasser in den Bottich zugeführt wird.

7. Waschsteuerverfahren nach Anspruch 6, bei dem der vorbestimmte Wasserpegel ein für die Heizeinrichtung sicherer Wasserpegel ist, bei dem das Wasser erwärmt wird.

8. Waschsteuerverfahren nach Anspruch 1, weiterhin umfassend folgenden Schritt:
Erfassen einer Temperatur des Wassers, wobei
die erfasste Temperatur mit einer vorbestimmten Solltemperatur verglichen wird und, wenn die erfasste Temperatur unterhalb der Solltemperatur liegt, das Wasser erwärmt wird, bis die Temperatur des Wassers die Solltemperatur erreicht.

9. Waschsteuerverfahren nach Anspruch 8, bei dem das Erwärmen des getrennten Wassers umfasst:
Aktivieren einer Waschheizeinrichtung, bis die Temperatur des Wassers die Solltemperatur erreicht, und, wenn die erfasste Temperatur die Solltemperatur erreicht hat, Deaktivieren der Waschheizeinrichtung, um das Wasser, das der Drehtrommel erneut zugeführt wird, auf einer optimalen Temperatur zu halten.

10. Waschmaschine, umfassend:
einen Wasserbottich (11), um Wasser aufzunehmen;
eine Drehtrommel (12), die in dem Wasserbottich (11) angebracht ist, um Wäsche aufzunehmen;
eine Zirkulationseinheit (40), um das Wasser in dem Wasserbottich (11) in die Drehtrommel (12) zuzuführen;
eine Wasserzuführeinheit (20), um die Zufuhr von Wasser zu steuern;
eine Waschheizeinrichtung (16), um Wasser zu erwärmen; und
eine Steuereinheit (56), um
einen Umfang einer Ladung gemäß einem Gewicht der Wäsche zu erfassen,
die Wasserzuführeinheit zu steuern, eine Menge von Wasser, die gemäß dem erfassten Umfang der Ladung bestimmt ist, in den Wasserbottich (11) zuzuführen,
die Zirkulationseinheit (40) zu steuern, das Wasser in dem Wasserbottich (11) in die Drehtrommel (12) zuzuführen, so dass die Wäsche durch das Wasser gewässert wird,
die Waschheizeinrichtung (16) zu steuern, das Wasser zu erwärmen, und
das erwärmte Wasser derart zu steuern, dass es erneut der Drehtrommel (12) zugeführt wird, so dass das Waschen mit Hilfe des erwärmten Wassers ausgeführt wird;
**dadurch gekennzeichnet, dass**
die Steuereinheit dazu eingerichtet ist, die Waschheizeirichtung (16) zu steuern, das Wasser in dem Wasserbottich (11) zu erwärmen, nachdem das Wasser, das in der Wäsche absorbiert ist, aus der Wäsche durch die Drehung der Drehtrommel (12) getrennt wurde.

11. Waschmaschine nach Anspruch 10, bei der die Steuereinheit (56) einen Umfang einer Ladung gemäß einem Gewicht der Wäsche erfasst und die Wasserzuführeinheit (20) derart steuert, dass sie eine Menge Wasser, die gemäß dem erfassten Umfang der Ladung eingestellt ist, in den Wasserbottich (11) zuführt.

12. Waschmaschine nach Anspruch 11, bei der die eingestellte Wassermenge eine minimale Wasserzuführmenge ist, die auf der Basis eines erfassten Umfangs der Ladung eingestellt ist.

13. Waschmaschine nach Anspruch 10, bei der das Wasser, das in den Wasserbottich (11) zugeführt wird, Waschmittelwasser, das Waschmittel enthält, und Waschwasser ist, die miteinander gemischt sind.

14. Waschmaschine nach Anspruch 13, bei der die Steuereinheit (56) die Drehtrommel (12) mit einer minimalen Umdrehungszahl dreht, bei der die Wäsche geschleudert wird, um das Waschmittelwasser, das in der Wäsche absorbiert ist, aus der Wäsche zu drücken.

15. Waschmaschine nach Anspruch 14, bei der die minimale Umdrehungszahl pro Minute etwa 50 bis 300 U/min beträgt.

16. Waschmaschine nach Anspruch 10, weiterhin umfassend:
eine Wasserpegel-Erfassungseinheit (52), um einen Wasserpegel des Wassers zu erfassen, wobei
die Steuereinheit (56) den Wasserpegel, der von der Wasserpegel-Erfassungseinheit (52) erfasst wird, mit einem vorbestimmten Wasserpegel vor dem Erwärmen des Wassers vergleicht und, wenn der erfasste Wasserpegel unter dem vorbestimmten Wasserpegel liegt, die Wasserzuführeinheit (20) derart steuert, dass sie Wasser in den Wasserbottich (11) zuführt.

17. Waschmaschine nach Anspruch 16, bei der der vorbestimmte Wasserpegel ein für die Heizeinrichtung sicherer Wasserpegel ist, bei dem das Wasser erwärmt wird.

18. Waschmaschine nach Anspruch 10, weiterhin umfassend:
eine Temperaturerfassungseinheit (54), um eine Temperatur des Wassers zu erfassen, wobei
die Steuereinheit (56) die Temperatur, die von der Temperaturerfassungseinheit (54) erfasst wird, mit einer vorbestimmten Solltemperatur vergleicht und die Waschheizeinrichtung (16) aktiviert, bis die Temperatur des Wassers die Solltemperatur erreicht hat, wenn die erfasste Temperatur unter der Solltemperatur liegt.

19. Waschmaschine nach Anspruch 18, bei der das Erwärmen des getrennten Wassers umfasst:
sofern die erfasste Temperatur die Solltemperatur erreicht hat, Deaktivieren der Waschheizeinrichtung (16), um das Wasser, das in die Drehtrommel (12) zugeführt wird, auf einer optimalen Temperatur zu halten.

## Revendications

1. Procédé de commande de lavage d'une machine à laver incluant une cuve d'eau, un tambour rotatif monté dans la cuve d'eau destinée à recevoir du linge et une unité de circulation permettant de fournir l'eau se trouvant dans la cuve d'eau dans le tambour rotatif, le procédé de commande de lavage comprenant les étapes suivantes :
la détection de la valeur de la charge en fonction du poids du linge,
la fourniture d'une quantité d'eau réglée en fonction de la valeur détectée de la charge dans la cuve d'eau,
la fourniture de l'eau se trouvant dans la cuve d'eau dans le tambour rotatif au travers de l'unité de circulation de sorte à mouiller le linge,
**caractérisé en ce que** le procédé comprend en outre les étapes suivantes :
la séparation de l'eau, absorbée dans le linge, du linge en faisant tourner le tambour rotatif, et
le chauffage de l'eau séparée et la fourniture à nouveau de l'eau chauffée dans le tambour rotatif par l'intermédiaire de l'unité de circulation.

2. Procédé de commande de lavage selon la revendication 1, dans lequel la valeur réglée d'eau représente une valeur minimale d'alimentation réglée sur la base de la valeur détectée de la charge.

3. Procédé de commande de lavage selon la revendication 1, dans lequel l'eau fournie dans la cuve d'eau est de l'eau avec détergent incluant de la lessive et de l'eau de lavage, mélangées l'une à l'autre.

4. Procédé de commande de lavage selon la revendication 3, dans lequel la séparation de l'eau, absorbée dans le linge, du linge inclut :
l'extraction de l'eau avec détergent, absorbée dans le linge, du linge en faisant tourner le tambour rotatif à une vitesse de rotation minimale à laquelle le linge est séché par centrifugation.

5. Procédé de commande de lavage selon la revendication 4, dans lequel la vitesse de rotation minimale va approximativement de 50 à 300 tours/min.

6. Procédé de commande de lavage selon la revendication 1, comprenant en outre l'étape suivante :
la détection du niveau de l'eau avant le chauffage de l'eau, où
le niveau d'eau détecté est comparé à un niveau d'eau prédéterminé avant de chauffer l'eau, et, lorsque le niveau d'eau détecté est inférieur au niveau d'eau prédéterminé, de l'eau est fournie dans la cuve d'eau.

7. Procédé de commande de lavage selon la revendication 6, dans lequel le niveau d'eau prédéterminé est un niveau d'eau de sécurité pour le chauffage auquel l'eau est chauffée.

8. Procédé de commande de lavage selon la revendication 1, comprenant en outre l'étape suivante :
la détection de la température de l'eau, où
la température détectée est comparée à une température cible prédéterminée, et, lorsque la température détectée se trouve en dessous de la température cible, l'eau est chauffée jusqu'à ce que la température de l'eau atteigne la température cible.

9. Procédé de commande de lavage selon la revendication 8, dans lequel le chauffage de l'eau séparée inclut :
l'activation d'un dispositif de chauffage de lavage jusqu'à ce que la température de l'eau atteigne la température cible, et, lorsque la température détectée a atteint la température cible, la désactivation du dispositif de chauffage de lavage pour maintenir à une température optimale l'eau fournie à nouveau dans le tambour rotatif.

10. Machine à laver comprenant :
une cuve d'eau (11) destinée à recevoir de l'eau,
un tambour rotatif (12) monté dans la cuve d'eau (11) pour recevoir du linge,
une unité de circulation (40) destinée à fournir l'eau se trouvant dans la cuve d'eau (11) dans le tambour rotatif (12),
une unité d'alimentation en eau (20) destinée à réguler l'alimentation en eau,
un dispositif de chauffage de lavage (16) destiné à chauffer l'eau, et
une unité de commande (56) destinée à détecter la valeur de la charge en fonction du poids du linge, à commander l'unité d'alimentation en eau pour qu'elle fournisse une quantité d'eau réglée en fonction de la valeur détectée de la charge dans la cuve d'eau (11),
destinée à commander l'unité de circulation (40) pour qu'elle fournisse l'eau se trouvant dans la cuve d'eau (11) dans le tambour rotatif (12) de sorte à ce que le linge soit mouillé par l'eau, à commander le dispositif de chauffage de lavage (16) pour chauffer l'eau et commander l'eau chauffée pour qu'elle soit fournie à nouveau dans le tambour rotatif (12) de sorte à ce que le lavage soit effectué en utilisant l'eau chauffée,
**caractérisée en ce que**
l'unité de commande est conçue pour commander le dispositif de chauffage de lavage (16) pour qu'il chauffe l'eau située dans la cuve d'eau (11) après que l'eau, absorbée dans le linge, soit séparée du linge par la rotation du tambour rotatif (12).

11. Machine à laver selon la revendication 10, dans laquelle l'unité de commande (56) détecte la valeur de la charge en fonction du poids du linge et commande l'unité d'alimentation en eau (20) pour qu'elle fournisse une quantité d'eau réglée en fonction de la valeur détectée de la charge dans la cuve d'eau (11).

12. Machine à laver selon la revendication 11, dans laquelle la valeur fixée d'eau est une valeur minimale d'alimentation en eau réglée sur la base de la valeur détectée de la charge.

13. Machine à laver selon la revendication 10, dans laquelle l'eau fournie dans la cuve d'eau (11) est de l'eau avec détergent incluant de la lessive et de l'eau de lavage, mélangées l'une à l'autre.

14. Machine à laver selon la revendication 13, dans laquelle l'unité de commande (56) fait tourner le tambour rotatif (12) à une vitesse de rotation minimale à laquelle le linge est séché par centrifugation pour extraire du linge l'eau avec détergent absorbée dans le linge.

15. Machine à laver selon la revendication 14, dans laquelle la vitesse de rotation minimale va approximativement de 50 à 300 tours/min.

16. Machine à laver selon la revendication 10, comprenant en outre :
une unité de détection de niveau d'eau (52) destinée à détecter le niveau de l'eau, dans laquelle
l'unité de commande (56) compare le niveau d'eau détecté par l'unité de détection de niveau d'eau (52) à un niveau d'eau prédéterminé avant de chauffer l'eau, et, lorsque le niveau d'eau détecté est inférieur au niveau d'eau prédéterminé, elle commande l'unité d'alimentation en eau (20) pour qu'elle fournisse de l'eau dans la cuve d'eau (11).

17. Machine à laver selon la revendication 16, dans laquelle le niveau d'eau prédéterminé est un niveau d'eau de sécurité pour le chauffage auquel l'eau est chauffée.

18. Machine à laver selon la revendication 10, comprenant en outre :
une unité de détection de température (54) destinée à détecter la température de l'eau, dans laquelle
l'unité de commande (56) compare la température détectée par l'unité de détection de température (54) à une température cible prédéterminée, et elle active le dispositif de chauffage de lavage (16) jusqu'à ce que la température de l'eau atteigne la température cible lorsque la température détectée est inférieure à la température cible.

19. Machine à laver selon la revendication 18, dans laquelle le chauffage de l'eau séparée inclut :
la désactivation du dispositif de chauffage de lavage (16) lorsque la température détectée a atteint la température cible afin de maintenir à une température optimale l'eau fournie à nouveau dans le tambour rotatif (12).
